# EUROPEAN PATENT APPLICATION

(11) **EP 4 821 972 A1**
(43) Date of publication of application: **14.10.2026**
(21) Application number: 25169974.0
(22) Date of filing: 11.04.2025
(51) Int. Cl.: C08J 11/16, B29B 17/02

(54) **RECYCLING OF CARTRIDGES**

(71) Applicant: Henkel AG & Co. KGaA, 40589 Düsseldorf (DE)
(72) Inventor: Schafhausen, Niklas, 40627 Düsseldorf (DE); Dunekake, Ralf, 40589 Düsseldorf (DE); Gutacker, Andrea, 40764 Langenfeld (DE)

(57) **Abstract**

The invention relates to a process for recycling cartridges (22) of plastic comprising at least one silicone formulation, wherein the cartridges (22) have a tube body which is open at one end, is closed at the other end by a lid (30) with a threaded nozzle (54) for a nozzle (24) and a piercable inner opening, and in which a piston (36) is arranged in a movable manner, by which process
a) the cartridges (22) are preferably first aligned in such a way that they are pressed and fixed with their threaded nozzle (54) to a ring stop (68) which freely encompasses the threaded nozzle (54);
b) the tip of the cartridge, preferably immediately behind the lid (30), is cut off;
c) the piston (36) is pushed out of the tube sleeve (32) with an ejection tool in the direction of the lid (30);
d) optionally, the silicone formulation is separated from the inner wall of the tube sleeve (32) and/or from the lid (30) cut off and separately collected;
e) the at least one silicone formulation is depolymerized by reacting the silicone formulation with
(B)at least one base catalyst, preferably at least one metal hydroxide,
(C)at least one alcohol and
(D)water
at a temperature of >50°C, preferably >60°C, more preferably >70°C, even more preferably >75°C, most preferably >80°C.

## Description

The invention relates to a process for the recycling of cartridges made of plastic, which comprise silicone formulations, in particular cured and uncured one- or two-component silicone formulations or functional silicone polymers or silicone oil.

Cartridges, especially cylindrical cartridges, made of plastic are commonly used for packaging and storing silicone formulations. When filled, such cartridges absorb a viscous plastic mass of said silicone formulation. Typically, the cartridges have a tubular body that is open at one end and closed at the other end by a lid. A threaded nozzle is usually provided in the lid on which a nozzle can be screwed on. The inner area of the threaded nozzle has a piercable opening. A piston is arranged in the pipe socket in a movable manner, it limits the filling with the silicone formulation from the rear towards the open end.

For application of the silicone formulation, pressure is usually exerted on the piston from the outside by a suitable injection tool. As a result, the silicone formulation escapes from the threaded nozzle and the nozzle. The cartridge is usually deflated when the plunger is pressed to the inner surface of the lid.

After application from the nozzle, the silicone formulation solidifies, usually by curing of the silicone formulation. However, the term solidification is not to be understood as meaning that the silicone formulation becomes a rigid solid body, but rather that most of the silicone formulation offered in cartridges solidifies into permanently elastic bodies that can be used for joint sealing, sealing and bonding.

The emptied cartridge still contains a noticeable proportion of the silicone formulation. On the one hand, the silicone formulation remains on the inner walls of the tube sleeve when the piston is pushed forward for emptying. The silicone formulation forms a thin film on the inner wall. On the other hand, the silicone formulation remains in the space between the piston and the pierced opening of the threaded nozzle. This part is usually not yet completely solidified, but only solidified in the area of the puncture opening, where the normal atmosphere and moisture has access.

The cartridges are usually made of a thermoplastic. According to the current state of the art, the emptied cartridges are not recycled, but rather landfilled as waste. On the one hand, however, this requires capacities for permanent storage of the resulting waste and results in the corresponding pollution of the environment, and on the other hand, valuable raw materials are irretrievably thrown away, which is disadvantageous. Therefore, better solutions for dealing with silicone formulation cartridge waste is desired.

WO 94/06609 A1 relates to a method for recycling empty, cylindrical cartridges made of plastic. When filled, the cartridges hold a viscous plastic mass, for example silicone, acrylic, polyurethane. They have a tubular body that is open at one end and closed at the other end by a lid. There is a threaded socket provided in the lid onto which a nozzle can be screwed. The interior of the threaded socket has an opening that can be pierced through. A piston is displaceably arranged in the pipe socket; it limits the filling of the plastic mass towards the rear and towards the open end.

A process for recycling emptied, cylindrical plastic cartridges for dispensing viscous, setting plastic materials such as for example silicone, acryl, polyurethane, is disclosed. The cartridges have a tubular body open at one end and closed at the other end by a lid with a threaded neck for a nozzle and a pierceable inner opening in which a piston is movably arranged. The cartridges are at first oriented in such a way that their threaded necks are pressed against and secured to a ring stop which freely encloses the threaded necks, (b) the tubular body is then cut directly behind the lid, preferably sawn through; (c) the piston is pressed in the direction of the lid out of the tubular sleeve by means of an ejection tool and the inner wall of the tubular sleeve is freed from adhering plastic material by means of a brush; (d) the plastic material particles detached from the tubular sleeve are collected for ulterior processing and the cleaned tubular sleeves are also collected in a container.

The cleaned tubular sleeves, the piston and the lid are preferably crushed into granules.

It is explained that this method specifies a way to separate the plastic material of the cartridge from the adhering parts to the plastic mass, so that the cleaned parts of the cartridge on the one hand and the solidified plastic mass on the other would result. In particular, the plastic material of the cartridge could be further processed, for example as a thermoplastic to be reformed into plastic bodies, preferably into cartridges. But the silicone material could also be used without having to deposit it, it could be used as an additional fuel in large furnaces of all kinds, e.g. concrete stoves, for example.

However, since silicone formulation cartridge waste still comprises silicone formulation residue, especially cured, i.e., crosslinked silicone formulation, the recycling solution of WO 94/06609 A1 is results in silicone waste to be discarded or burnt, which is unsatisfactory, especially from an environment protection point of view.

Besides, generally, silicone formulations cannot be recycled and must be discarded. A suitable process for recycling or silicone polymers is needed.

Silicone formulations or oil can be burned or calcinated to form silica. This reduces the use and application of the material, cannot be called recycling, but downcycling.

In view the above, better possibilities for recycling silicone formulation cartridges, in particular for recycling cartridges comprising silicone formulations, in particular cured and uncured one- or two-componentsilicone formulations or functional silicone polymers or silicone oil, have been aimed at. In particular, a process has been aimed at, which can be carried out in a simple and efficient manner and which avoids use of hazardous materials or of harsh conditions. Said process should also allow for simple upscaling and should be particularly suited for recycling of crosslinked materials. Finally, the products of said process should allow for simple use for preparation of efficient adhesives, sealants, and/or coating materials and for use as additive and as substitute for silicone oils.

The present invention has achieved said objectives by providing a process for the recycling silicone formulation cartridges in accordance with claim 1. Preferred embodiments of said process are described in the depending claims. In addition, a specific silicone formulation is claimed, which is obtainable by said process, and which is particularly suitable for preparation of silicone formulations.

The present invention describes a process for recycling cartridges (22) of plastic comprising at least one silicone formulation, wherein the cartridges (22) have a tube body which is open at one end, is closed at the other end by a lid (30) with a threaded nozzle (54) for a nozzle (24) and a piercable inner opening, and in which a piston (36) is arranged in a movable manner, by which process
a) the cartridges (22) are preferably first aligned in such a way that they are pressed and fixed with their threaded nozzle (54) to a ring stop (68) which freely encompasses the threaded nozzle (54);
b) the tip of the cartridge, preferably immediately behind the lid (30), is cut off;
c) the piston (36) is pushed out of the tube sleeve (32) with an ejection tool in the direction of the lid (30);
d) optionally, the silicone formulation is separated from the inner wall of the tube sleeve (32) and/or from the lid (30) cut off and separately collected;
e) the at least one silicone formulation is depolymerized by reacting the silicone formulation with
   (B) at least one base catalyst, preferably at least one metal hydroxide,
   (C) at least one alcohol and
   (D) water
   at a temperature of >50°C, preferably >60°C, more preferably >70°C, even more preferably >75°C, most preferably >80°C.

The solution of the present invention is advantageous in several aspects:
A very effective method for recycling silicone formulation cartridges is provided, which yields components, that can be re-used for the preparation of cartridges and polysiloxanes in an easy way. The process of the invention can be implemented in a very cheap and easy manner and avoids harsh reaction conditions and use of dangerous, harmful and/or hazardous to health materials. Generally, the components to be used in the process of the present invention are much cheaper than the components to be used in conventional methods; the recycling silicone formulation cartridges can be carried out at comparatively milder conditions and lower temperatures; the process of the present invention is faster than conventional methods for depolymerization and is typically completed between 4-6 h with high yield; and the method of the present invention is operationally simpler than conventional methods, especially since the used organic salt is not corrosive. The process of the invention allows for use of low amounts of cheap, stable, and noncorrosive components and can be carried out at very mild temperatures for a comparable short time. Finally, the process of the invention does also not require any special reactor design or equipment and is particularly suitable for recycling of cartridges comprising some residue of silicone formulations, especially of cured or uncured silicone formulations.

The products obtainable by the process of the invention may comprise at least one hydroxy group, preferably at least two hydroxy groups, and are thus usable as telechelic polymers. Additionally, a solid phase can be separated, preferably by extraction, containing crosslinking units of the formulated silicone, which allows for effectively removing them from the organopolysiloxane.

Finally, the products of said process allow for simple use for preparation of efficient adhesives, sealants, and/or coating materials and for use as additive and as substitute for silicone oils.

As used herein, the singular forms "a", "an" and "the" include plural referents unless the context clearly dictates otherwise.

The term "at least one," as used herein, means 1 or more, i.e., 1, 2, 3, 4, 5, 6, 7, 8, 9, or more. With reference to an ingredient, the indication refers to the type of ingredient and not to the absolute number of molecules. "At least one polymer" thus means, for example, at least one type of polymer, i.e., that one type of polymer or a mixture of several different polymers may be used. Together with the weight indication, the indication refers to all compounds of the stated type which are contained in the composition/mixture, i.e., that the composition contains no further compounds of this type besides the stated quantity of the compounds in question.

The terms "comprising", "comprises" and "comprised of" as used herein are synonymous with "including", "includes", "containing" or "contains", and are inclusive or open-ended and do not exclude additional, non-recited members, elements, or method steps. If used, the phrase "consisting of" is closed and excludes all additional elements. Further, the phrase "consisting essentially of" excludes additional material elements but allows the inclusion of non-material elements that do not substantially change the nature of the invention.

When amounts, concentrations, dimensions, and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The term "about", as used herein in connection with a numerical value, relates to a variance of ±20%, preferably ±10% of the respective value.

The words "preferred", "preferably", "desirably" and "particularly", and synonyms thereof, are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word "may" is used in a permissive sense - that is meaning to have the potential to - rather than in the mandatory sense.

As used herein, room temperature is 23°C plus or minus 2°C. As used herein, "ambient conditions" means the temperature and pressure of the surroundings in which the composition is located or in which a coating layer or the substrate of said coating layer is located.

The molecular weights given in the present text refer to number average molecular weights (Mₙ), unless otherwise stipulated. All molecular weight data refers to values obtained by gel permeation chromatography (GPC) carried out using Water 2695 HPLC equipped with 3 Polypore columns and using a RI detector at 40°C. Stabilized toluene was used as eluent at 1 mL/min flow rate and a column temperature of 40°C. The calibration of the device was carried out using polystyrene standards. Preferably, all measurements are in accordance with DIN 55672-1:2007-08 at 40°C.

As used herein, "polydispersity" (PDI) refers to a measure of the distribution of molecular mass given in a resin sample. The polydispersity is calculated by dividing the weight average molecular weight (M_{w}) by the number average molecular weight (Mₙ).

Any hydroxyl (OH) values given herein are measured according to DIN 53240-2.

Viscosities of polymers and of compositions containing said polymers as described herein are, unless otherwise stipulated, measured using the Brookfield Viscometer, Model RVT at standard conditions of 20°C and 50% Relative Humidity (RH). The viscometer is calibrated using silicone oils of known viscosities, which vary from 5,000 cps to 50,000 cps. A set of RV spindles that attach to the viscometer are used for the calibration. Measurements of the polymers are done using the No. 6 spindle at a speed of 20 revolutions per minute for 1 minute until the viscometer equilibrates. The viscosity corresponding to the equilibrium reading is then calculated using the calibration.

As used herein, the term "silicone formulation" refers to a composition that must contain a silicone polymer.

For convenience in the description of the process of this invention, unsaturation provided by CH₂=CH-CH₂-terminal groups is referred to as "allyl" unsaturation.

As used herein, the term "hydrocarbyl" group refers to univalent group formed by removing a hydrogen atom from a hydrocarbon, e.g., methyl, ethyl, propyl, phenyl, tolyl, benzyl, etc.

As used herein, "C₁-C₈ alkyl" group refers to a monovalent group that contains 1 to 8 carbon atoms, that is a radical of an alkane and includes linear and branched organic groups. Examples of alkyl groups include but are not limited to: methyl; ethyl; propyl; isopropyl; n-butyl; isobutyl; sec-butyl; tert-butyl; n-pentyl; n-hexyl; n-heptyl; and 2-ethylhexyl. In the present invention, such alkyl groups may be unsubstituted or may be substituted with one or more substituents such as halo, nitro, cyano, amido, amino, sulfonyl, sulfinyl, sulfanyl, sulfoxy, urea, thiourea, sulfamoyl, sulfamide and hydroxy. The halogenated derivatives of the exemplary hydrocarbon radicals listed above might, in particular, be mentioned as examples of suitable substituted alkyl groups. In general, however, a preference for unsubstituted alkyl groups containing from 1 to 6 carbon atoms (C₁-C₆ alkyl) - for example unsubstituted alkyl groups containing from 1 to 4 atoms (C₁-C₄ alkyl) - should be noted.

As used herein, the term "C₂-C₈ alkenyl" group refers to an aliphatic hydrocarbon group which contains 2 to 8 carbon atoms and at least one carbon-carbon double bond, e.g., ethenyl, propenyl, butenyl, or pentenyl and structural isomers thereof such as 1- or 2-propenyl, 1-, 2-, or 3-butenyl, etc. Alkenyl groups can be linear or branched and substituted or unsubstituted. If they are substituted, the substituents are as defined above for alkyl.

As used herein, the term "C₂-C₈ alkynyl" group refers to an aliphatic hydrocarbon group which contains 2 to 8 carbon atoms and at least one carbon-carbon triple bond, e.g., ethynyl (acetylene), propynyl, butynyl, or pentynyl and structural isomers thereof as described above. Alkynyl groups can be linear or branched and substituted or unsubstituted.

The term "C₃-C₁₀ cycloalkyl" is understood to mean a saturated, mono-, bi- or tricyclic hydrocarbon group having from 3 to 10 carbon atoms. Examples of cycloalkyl groups include: cyclopropyl; cyclobutyl; cyclopentyl; cyclohexyl; cycloheptyl; cyclooctyl; adamantane; and norbornane.

As used herein, a "C₆-C₁₈ aryl" group used alone or as part of a larger moiety - as in "aralkyl group" - refers to optionally substituted, monocyclic, bicyclic, and tricyclic ring systems in which the monocyclic ring system is aromatic or at least one of the rings in a bicyclic or tricyclic system is aromatic. The bicyclic and tricyclic ring systems include benzofused 2-3 membered carbocyclic rings. Exemplary aryl groups include: phenyl; indenyl; naphthalenyl; tetrahydronaphthyl, tetrahydroindenyl; tetrahydroanthracenyl; and anthracenyl. And a preference for phenyl groups may be noted.

As used herein, an "aralkyl" group refers to an alkyl group that is substituted with an aryl group. As example of an aralkyl group is benzyl.

The terms "C₁-C₆₀ alkylene" group and "C₁-C₂₀ alkylene" group refer respectively to divalent groups that contain from 1 to 60 of from 1 to 20 carbon atoms, that are radicals of an alkane and include linear, branched, or cyclic groups, which groups may be substituted or unsubstituted and may optionally be interrupted by at least one heteroatom.

Where mentioned, the expression "interrupted by at least one heteroatom" means that the main chain of a residue comprises, as a chain member, at least one atom that differs from carbon atom. More particularly the term "heteroatom" refers to nitrogen, oxygen, halogens, phosphorus or sulfur. Oxygen (O) and nitrogen (N) may be mentioned as typical heteroatoms in the context of the present invention.

As used herein, the term "arylene" group refers to a divalent group that is a radical of an aryl group. Suitable arylene group includes phenylene, furanylene, piperidylene, and naphthylene.

Where mentioned, the expression "contain at least one heteroatom" means that the main chain or side chain of a residue comprises at least one atom that differs from carbon atom and hydrogen.

Preferably the term "heteroatom" refers to nitrogen, oxygen, silicon, sulfur, phosphorus, halogens such as chlorine (CI), bromine (Br), fluor (F). Oxygen (O) and nitrogen (N) may be mentioned as typical heteroatoms in the context of the present invention.

As used herein, the term "hydrocarbon residue" includes saturated or unsaturated hydrocarbon residues.

As used herein, the term "heterocyclic compound" refers to a saturated or unsaturated, monocyclic, bicyclic, polycyclic, or fused compound containing at least one heteroatom, preferably O, S, N, and/or P, in the ring structure.

As used herein, the term "halogen" refers to fluorine, chlorine, bromine, or iodine and correspondingly the term "halide" denotes fluoride, chloride, bromide, or iodide anions.

In accordance with established terminology, a primary alcohol is understood to be an alcohol, the hydroxy (-OH) group of which is present as a -CH₂-OH group. A "secondary alcohol group" or a "secondary hydroxyl group" is constituted by a hydroxy group (-OH) attached to a saturated carbon atom which has two other carbon atoms attached to it. Analogously, a "tertiary alcohol group" or "tertiary hydroxyl group" is constituted by a hydroxy group (-OH) attached to a saturated carbon atom which has three other carbon atoms attached to it.

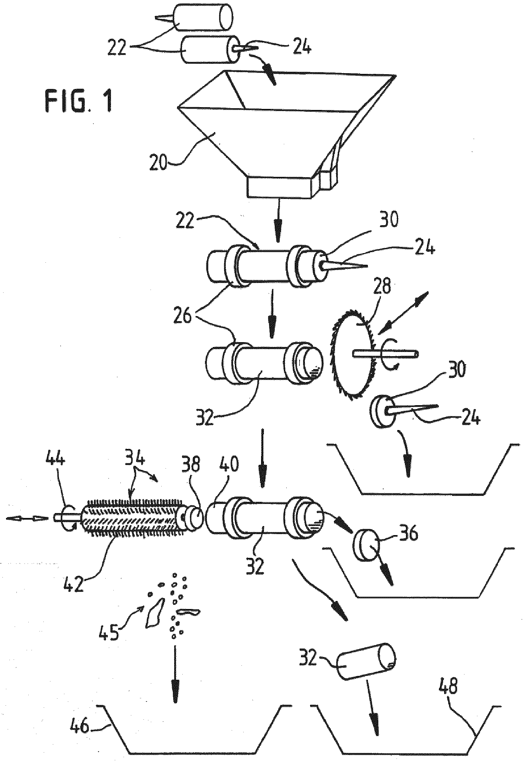

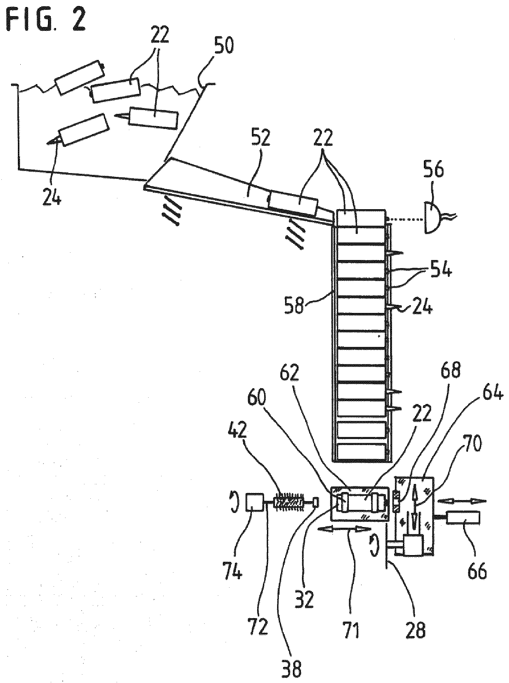

In the following, the claimed invention will be illustrated by the accompanying figures, which are not meant to limit the scope of the invention to the elements shown in said figures. More precisely, Fig. 1 is a basic representation of important process steps to explain the process according to the invention, and Fig. 2 is a sketch of the principle of a device for carrying out the procedure.

Fig. 1 shows a sorting and positioning device 20, into whose hopper emptied cartridges 22 are entered from above. The cartridges 22 are partly equipped with a nozzle 24. The process of alignment and positioning will not be discussed in detail here, reference is made to Fig. 2 in that context.

The individual cartridges leave the sorting and positioning device 20 in the specified orientation, as shown for cartridge 22 below the device 20. By means of suitable clamping means 26, the cartridge 22 is fixed in the area of its tube body, then - as shown in the part below - the cartridge is cut by means of a saw 28 immediately behind its lid 30. The figure shows on the left a tube sleeve 32 that is still in the clamping means 26, and on the right the falling, cut off lid 30 with the nozzle 24 attached to it.

The next figure shows a device 34 for the pushing out a piston 36. In the embodiment shown here, a crank drive is used. A stopper 38 is inserted into the tube sleeve 32 at the open end 40, it pushes the piston 36 further in the direction of the original pushing direction, i.e., towards the cut surface where the lid 30 has been separated. The piston 36 falls out of the tube sleeve as a result thereof.

Behind the stopper, there is a brush 42. It fills the tube sleeve 32 when the ejection process is finished. The brush 42 is rotated by a sketched rotary drive 44, by which the film of a plastic mass (silicone) on the inner wall of the tube sleeve 32 is mechanically detached. The resulting rubber-like particles 45 of plastic mass are collected in a container 46. The cleaned tube sleeves are placed in a container 48, but they can also be granulated immediately. Usually, the cartridges are made of a thermoplastic, in particular of polyethylene, and the granules can be used to create plastic bodies of said material again.

The sawn-off lids 30 with or without nozzle 24 and the pistons 36 can be deposited uncleaned in the simplest version of the process. They take up much less space compared to emptied cartridges in the landfill.

However, it is intended to clean these parts 30, 24 and 36 as well. As a rule, the plastic mass on them is not yet solid. The parts are therefore preferably stored temporarily, for example for one day, until the plastic mass is solid. Intermediate storage can be carried out separately for the individual parts, i.e., in a container for piston 36 and in a container for lid 30. Once the plastic mass has hardened, the adherent, now solid plastic mass is preferably mechanically removed. This allows the flasks 36 and the lids 30 (possibly with nozzle 24) to be recycled, for example granulated. However, it is also possible to use the piston 36 for new cartridges.

For complete recycling, the lids 30 are preferably separated from the nozzles 24 that may be connected to them. The lids 30 are preferably aligned and the adhering plastic mass is preferably mechanically removed. The same preferably applies to the nozzles 24. After separating the plastic mass and plastic parts, both can be recycled separately. The same applies to the pistons 36.

Alternatively or additionally, the lids 30 and/or nozzle 24 can be directly added to step d) of the present invention for removal and depolymerization of silicone contaminants remained in the lids and nozzle.

Fig. 2 shows preferred parts of a device. The emptied cartridges 22 are first collected in a silo 50. From there, they preferably slide over a lower exit on a shaker chute 52, which is preferably slightly inclined downwards and preferably slightly reduces in width in the same direction. For the sake of representation, the silo 50 and the shaker chute 52 are shown much smaller than they should be in relation to the cartridges 22. In the shaker chute 52 there are a large number of cartridges 22 at the same time. They are increasingly aligned over a relatively long path compared to their length, and they leave the shaker chute 52 in the longitudinal direction, as shown for cartridge 22 at the end of the shake chute 52.

However, the longitudinal alignment may be such that the threaded nozzle 54 is in the direction of delivery of the cartridge, as shown for the said cartridge 22, or in the opposite direction. Furthermore, a nozzle 24 may be screwed onto the threaded nozzle 54, as is also the case for some of the drawn cartridges 22. To sort the two orientations, an ultrasonic device 56 is preferably provided. If, as shown in Fig. 2, the threaded nozzle 54 and/or the nozzle 24 are located in the direction of conveyance, the echo of an ultrasonic pulse is more likely to arrive than in the reverse case, in which an ultrasonic pulse is echoed into the tube body and reflected at the piston 36. Those cartridges 22, the lid of which 30 points to the right, are pushed out by a stopper (not shown) in the direction of conveyance to the right, i.e., in the plane of Fig. 2 upwards, the others in the opposite direction. The emptied cartridges aligned in this way are preferably stacked on top of each other in a collection device 58. Controlled by a (not shown) control device, for example by a star wheel whose prongs reach between the last, lower cartridges 22, they fall into a collecting device 60. It is arranged on a table 62 that can be moved transversely to the longitudinal direction of the cartridges 22. Opposite to the fixed cartridge 22 (on the right) there is a second, longitudinally movable arrangement 64, to which a hydraulic cylinder 66 is assigned for movement, on the one hand a ring stop 68 and on the other hand a saw 28 arranged at an exact distance from it. To the right of the ring stop 68 a turning tool 70 on a nozzle 24 (not shown) may also be provided, which can be contacted with the system by friction that may be screwed onto the threaded nozzle 54. The arrangement 64 is pressed against the emptied cartridge 22 by means of the hydraulic cylinder 66 until the ring stop 68 rests on the outer surface of the lid 30. The ring stop 68 has an inner opening which is so large that the nozzle 24 (if available) and threaded nozzle 54 cannot interfere with this process.

In the next step, the turning tool is operated and releases any nozzle 24, which then falls into a prepared collecting container.

In the next step, the saw 28 is moved and driven transversely to the longitudinal direction of the cartridge 22 (double arrow 70), it cuts through the cartridge immediately behind the inner wall of the lid 30. What remains is a tube sleeve 32, which is still held in by the clamping means 26, and a lid 30 with a threaded nozzle 54, which is removed from the ring stop 68 downwards and is temporarily stored in another container (not shown).

Next, the table 62, on which the clamping means 26 are located, is moved by a hydraulic cylinder (not shown) to the left (cf. double arrow 71). There, on the same axis as the tube sleeve 32, there is provided on a shaft 72, which can be rotated by a motor 74 arranged at the left end, the stopper 38 at the right end and the brush 42 in between. By moving the table 62 to the left, the stopper 38 enters the tube sleeve 32 and pushes the piston 36 still there out to the right, so that it can fall into another (not shown) collecting container. In continuation of the movement, the brush 42 is placed in the tube sleeve 32, which it preferably fills completely. By turning the motor 74, the brush 42 is rotated, which loosens a film of plastic mass on the inner wall of the tube sleeve 32.

Now, the table 62 can move to the right again. Any loosened particles of plastic mass still present in the tube sleeve 32 are reached by a suitable aid or by appropriate alignment of the entire arrangement (the clamping device holds the cartridges 22 essentially vertically so that the crumbs can fall out). The clamping device 26 is now released, the cleaned tube sleeve 32 falls into another (not shown) storage container or is crushed directly into granules, packed and prepared for further processing in a plastic injection machine.

The resulting crumbs 45 of solidified plastic mass are collected in a separate container (not shown).

After intermediate storage, i.e., until the plastic mass on them has solidified, the adhering plastic mass is removed from the separately stored pistons 36, the cut off lids 30 and the nozzles 24. The devices used for this purpose are discussed in detail. In each case, the individual parts are aligned according to the device described above and the plastic mass is mechanically scraped off, scraped off and removed. The cleaned plastic parts are shredded (granulated) and are available for further processing. The resulting chunks of solidified plastic mass are collected in the same container as described above for the plastic mass.

The cartridges located on the rear side, in which the longitudinal orientation is such that the threaded nozzle points towards the shake chute, are processed accordingly, the corresponding arrangement is constructed exactly mirror-inverted as the device described above. In a different version, it is also possible to rotate the differently oriented cartridges with a special device.

In a further embodiment of the invention, the cartridges, after they have been aligned, are exposed to sound at their open end with an ultrasonic pulse and it is determined which running route, the echo of this impulse needs. This allows for determination whether the cartridge has actually been completely emptied, i.e., whether the plunger has been pressed against the inner wall of the lid in the system. Such cartridges that are not completely emptied, i.e., in which there is still a supply of plastic mass that can be exported, are further processed separately if necessary. A stopper can be provided for this purpose, which places these cartridges in another queue.

The present invention is directed to a process for recycling cartridges (22) of plastic comprising at least one silicone formulation, wherein the cartridges (22) have a tube body which is open at one end, is closed at the other end by a lid (30) with a threaded nozzle (54) for a nozzle (24) and a piercable inner opening, and in which a piston (36) is arranged in a movable manner, by which process
a) the cartridges (22) are preferably first aligned in such a way that they are pressed and fixed with their threaded nozzle (54) to a ring stop (68) which freely encompasses the threaded nozzle (54);
b) the tip of the cartridge, preferably immediately behind the lid (30), is cut off;
c) the piston (36) is pushed out of the tube sleeve (32) with an ejection tool in the direction of the lid (30);
d) optionally, the silicone formulation is separated from the inner wall of the tube sleeve (32) and/or from the lid (30) cut off and separately collected;
e) the at least one silicone formulation is depolymerized by reacting the silicone formulation with
   (B) at least one base catalyst, preferably at least one metal hydroxide,
   (C) at least one alcohol and
   (D) water
   at a temperature of >50°C, preferably >60°C, more preferably >70°C, even more preferably >75°C, most preferably >80°C.

According to a preferred variant of the invention, the tube sleeves (32) and/or the lids (30) cleaned from silicone formulation are separately collected and recycled, preferably by granulating and thermoplastic processing of the material.

According to a preferred variant of the invention, silicone formulation is separated from the tube sleeves (32) and/or the lids (30) by mechanical means, in particular by use of a brush.

Alternatively or additionally, the lids 30 and/or nozzle 24 can be directly added to step d) of the present invention for removal and depolymerization of silicone contaminants.

According to a further variant of the invention, the process comprises the step of granulating the silicone formulation.

In the present invention the silicone formulation is depolymerized by reacting the silicone formulation with (B) at least one base catalyst, preferably at least one metal hydroxide, (C) at least one alcohol and (D) water at a temperature of >50°C, preferably >60°C, more preferably >70°C, even more preferably >75°C, most preferably >80°C.

Preferably, the silicone formulation comprises at least one organopolysiloxane polymer (A) having unit formula:

(R¹₃₋ₓR²ₓSiO_{1/2})ₐ(R¹_{2-y}R²_{y}SiO_{2/2})_{b}(R¹_{1-z}R²_{z}SiO_{3/2})_{c}(SiO_{4/2})_{d} (I)

wherein each R¹ is independently selected from the group consisting of substituted or unsubstituted hydrocarbyl groups, which may be optionally interrupted by at least one heteroatom, a hydroxy group, hydrogen, and hydrolysable groups; each R² is independently selected from aliphatically unsaturated groups; x has a value from 0 to 3, y has a value from 0 to 2, and z has a value from 0 to 1; subscripts a, b, c and d represent mole fractions of each unit in the unit formula, and subscripts a, b, c, and d have values such that preferably 0<a≤0.3, preferably 0.4≤b<1, preferably 0≤c≤0.2 and preferably 0≤d≤0.3, with the proviso that a+b+c+d=1.

Organopolysiloxane polymers generally comprise the monofunctional (M) siloxy units (i.e., the (R¹₃₋ₓR²ₓSiO_{1/2}) siloxy units), difunctional (D) siloxy units (i.e., the (R¹_{2-y}R²_{y}SiO_{2/2}) siloxy units), trifunctional (T) siloxy units (i.e., the (R¹_{1-z}R²_{z}SiO_{3/2}) siloxy units), and quadrifunctional (Q) siloxy units (i.e., the (SiO_{4/2}) siloxy units). Although if the organopolysiloxane polymer includes at least one Q siloxy unit, the organopolysiloxane polymer is considered a silicone polymer by one of skill in the art, rather than a silicone resin, due to the degree of polymerization (DP) in the organopolysiloxane polymer and the molar fraction of Q siloxy units present therein.

The unit formula of the organopolysiloxane polymer is representative of the average formula of the M, D, T and Q siloxy units. For example, the M siloxy units may be independently selected within the formula (R¹₃₋ₓR²ₓSiO_{1/2}), and the D siloxy units may be independently selected within the formula (R¹_{2-y}R²_{y}SiO_{2/2}). The subscripts, or mole fractions of the M, D, T and Q siloxy units in the organopolysiloxane polymer, are collective based on all M siloxy units, all D siloxy units, all T siloxy units, and all Q siloxy units, respectively. By way of example, the organopolysiloxane polymer may include M units corresponding to (R¹₃SiO_{1/2}), (R¹₂R²SiO_{1/2}), (R¹R²₂SiO_{1/2}), and/or (R²₃SiO_{1/2}), depending on whether subscript x is 0, 1, 2 or 3. Similarly, the organopolysiloxane polymer may include D units corresponding to (R¹₂SiO_{2/2}), (R¹R²SiO_{2/2}), and/or (R²₂SiO_{2/2}), depending on whether subscript y is 0, 1 or 2. Finally, the T units may be selected from the group consisting of (R¹₁SiO_{3/2}) and (R²SiO_{3/2}) and a combination thereof in the (A) organopolysiloxane polymer.

Each R¹ is independently selected from the group consisting of substituted or unsubstituted hydrocarbyl groups, which may be optionally interrupted by at least one heteroatom, a hydroxy group, hydrogen, and hydrolysable groups. The hydrolysable groups are preferably selected from alkoxy groups, acetate groups, lactate groups, or oximino groups. Each R¹ independently may be linear, branched, cyclic, or combinations thereof. Cyclic hydrocarbyl groups encompass aryl groups as well as saturated or nonconjugated cyclic groups. Aryl groups may be monocyclic or polycyclic. One example of a combination of a linear and cyclic hydrocarbyl group is an aralkyl group. By "substituted", it is meant that one or more hydrogen atoms may be replaced with atoms other than hydrogen (e.g., a halogen atom, such as chlorine, fluorine, or bromine) , or a carbon atom within the chain of R¹ may be replaced with an atom other than carbon, i.e., R¹ may include one or more heteroatoms within the chain, such as oxygen, sulfur, nitrogen, or phosphorus. Hydrocarbyl groups may be exemplified by methyl, ethyl, n-propyl, isopropyl, n-butyl, isobutyl, sec-butyl, t-butyl, pentyl, hexyl, cyclohexyl, heptyl, octyl, nonyl, decyl, or a similar alkyl group; phenyl, tolyl, xylyl, naphthyl, or a similar aryl group; a benzyl, phenethyl, or a similar aralkyl group; and 3-chloropropyl, 2-bromoethyl, 3, 3, 3-trifluoropropyl, or a similar substituted (e.g., halogenated) alkyl group. When R¹ is not an aryl group, each R¹ is typically saturated and not an alkenyl or alkynyl group.

In preferred embodiments, each R¹ may be independently selected from the group consisting of alkyl groups, aryl groups, a hydroxy group, hydrogen, and hydrolysable groups, more preferably, from the group consisting of alkyl groups, aryl groups, a hydroxy group, hydrogen, alkoxy groups, acetate groups, lactate groups, and oximino groups.

In more preferred embodiments, each R¹ is independently selected from the group consisting of alkyl groups, aryl groups, a hydroxy group, hydrogen, acetate groups, alkoxy groups, more preferably, from the group consisting of methyl, ethyl, n-propyl, isopropyl, n-butyl, sec-butyl, isobutyl, t-butyl, pentyl, hexyl, cyclohexyl, benzyl, phenyl, hydroxy, hydrogen, acetate groups, methoxy group, ethoxy group, n-propoxy group, isopropoxy group, n-butoxy group, isobutoxy group, sec-butoxy group, and t-butoxy group.

In particularly preferred embodiments, each R¹ is independently selected from the group consisting of methyl, ethyl, propyl, isopropyl, benzyl, phenyl, hydroxy, hydrogen, acetate groups, methoxy group, ethoxy group, n-propoxy group, and isopropoxy group.

Each R² is independently selected from aliphatically unsaturated group, which may alternatively be referred to as ethylenic unsaturation. The ethylenic unsaturation in R² may be terminal. Each R² may be independently selected from the group consisting of an alkenyl group and an alkynyl group. "Alkenyl" means an acyclic, branched or unbranched, monovalent hydrocarbon group having one or more carbon-carbon double bonds. Alkenyl groups may have 2 to 30 carbon atoms, alternatively 2 to 24 carbon atoms, alternatively 2 to 20 carbon atoms, alternatively 2 to 12 carbon atoms, alternatively 2 to 10 carbon atoms, and alternatively 2 to 6 carbon atoms. Specific examples thereof include vinyl groups, allyl groups, and hexenyl groups. "Alkynyl" means an acyclic, branched or unbranched, monovalent hydrocarbon group having one or more carbon-carbon triple bonds. Alkynyl groups may have 2 to 30 carbon atoms, alternatively 2 to 24 carbon atoms, alternatively 2 to 20 carbon atoms, alternatively 2 to 12 carbon atoms, alternatively 2 to 10 carbon atoms, and alternatively 2 to 6 carbon atoms. Specific examples thereof include ethynyl, propynyl, and butynyl groups. Various examples of R² include CH₂=CH-, CH₂=CHCH₂-, CH₂=CH(CH₂)₄-, CH₂=C(CH₃)CH₂-H₂C=C(CH₃)-, H₂C=C(CH₃)-, H₂C=C(CH₃)CH₂-H₂C=CHCH₂CH₂-, H₂C=CHCH₂CH₂CH₂-, HC≡C-, HC≡CCH₂-, HC≡CCH(CH₃)-, HC≡CC(CH₃)₂-, and HC≡CC(CH₃)₂CH₂-. Alternatively, each R² may be an alkenyl group. Alternatively, each R² may be independently selected from the group consisting of vinyl, allyl, and hexenyl; alternatively vinyl and hexenyl. Preferably, each R² may be a vinyl group.

According to preferred embodiments, at least one of x, y, and z are 0, more preferably x, y, and z are 0.

The organopolysiloxane polymer (A) may have a viscosity at 25°C from greater than 0 mm²/s to less than 2,500,000 mm² /s, alternatively from greater than 0 mm²/s to less than 300,000 mm²/s, alternatively from greater than 0 mm²/s to less than 60,000 mm²/s. Preferably, the organopolysiloxane polymer (A) may have a weight-average molecular weight molecular weight (M_{W}) of from greater than 0 to 400,000 g/mol, alternatively from 1,000 g/mol to 200,000 g/mol, alternatively from 1,500 g/mol to 100,000 g/mol. The viscosity of the organopolysiloxane polymer (A) can be measured by BROOKFIELD viscometer. M_{W} of the (A) organopolysiloxane polymer can be determined via gel permeation chromatography employing a light-scattering detector, a refractive index detector, and a viscosity detector while employing polystyrene standards.

The component (A) may be one organopolysiloxane polymer. Alternatively, component (A) may be a combination of two or more different organopolysiloxane polymers. Methods of preparing (A) organopolysiloxane polymers are known in the art, for example, as described in U.S. Patent Application Publication 2002/0061998 to Cray, et al.

According to a preferred embodiment of the present invention, the silicone formulation comprising at least one organopolysiloxane (A) is reacted with at least one base catalyst (B), at least one alcohol (C), and water (D) to depolymeize the silicone formulation.

The at least one base catalyst (B) is preferably selected from the group consisting of alkali metal hydroxide, preferably sodium hydroxide, potassium hydroxide; in particular potassium hydroxide; alkaline earth metal hydroxide, preferably calcium hydroxide, magnesium hydroxide; aluminum hydroxide; boron hydroxide; ammonium hydroxide; tetraalkylammonium hydroxide, preferably quaternary ammonium hydroxide of type [NY₄]⁺OH⁻, wherein Y is alkyl, more preferably methyl, ethyl, propyl, iso-propyl, n-butyl, sec. butyl, tert. butyl, especially n-butyl, in particular, tetramethylammonium hydroxide, tetraethylammonium hydroxide; benzyl trimethyl ammonium hydroxide, preferably from quaternary ammonium hydroxide of the type [H₅C₆-CH₂-NY₃]⁺OH⁻, wherein Y is alkyl, more preferably methyl, ethyl, propyl, iso-propyl, n-butyl, sec. butyl, tert. butyl, especially n-butyl.

The at least one alcohol (C) is preferably selected from the group consisting of methanol, ethanol, n-propanol, iso-propanol, n-butanol, isobutanol, sec.-butanol, pentanol, hexanol, heptanol, octanol, nonanol, decanol, undecanol, preferably from the group consisting of methanol, ethanol, n-propanol, iso-propanol, n-butanol, isobutanol, sec.-butanol, more preferably n-propanol, iso-propanol, in particular iso-propanol.

In particularly preferred embodiments of the invention, the at least one base catalyst (B) is potassium hydroxide and the at least alcohol (C) is iso-propanol.

In principle, the weight ratio of at least one organopolysiloxane polymer (A), the at least one base catalyst (B), the at least one alcohol (C) and the water (D) can be chosen freely adapted to particular aims. However, the weight ratio of the at least one alcohol (C) to the at least one base catalyst (B) is preferably selected within the range of from >0.1-10 to 0.1, preferably of from 0.25-5.0 to 0.1, more preferably of from 0.5-2.0 to 0.1. The weight ratio of the at least one organopolysiloxane polymer (A) having unit formula (I) to the at least one alcohol (C) is preferably selected within the range of from 0.1-10 to 1, preferably of from 0.25-5 to 1, more preferably of from 0.5-2 to 1.

In preferred embodiments, the amount of water (D) used for the process for depolymerization of a silicone formulation according to the present invention is at least 1.0 wt.%, more preferably at least 2.0 wt.%, particularly preferably at least 5.0 wt.%, and at most 30.0 wt.%, more preferably at most 20.0 wt.%, particularly preferably at most 10.0 wt.%, based on the total weight of the at least one organopolysiloxane polymer (A) having unit formula (I), the at least one base catalyst (B), the at least one alcohol (C) and the water (D).

For example, the amount of water (D) is preferably selected from 1.0 wt.% to 30.0 wt.-%, preferably from 2.0 wt.% to 20.0 wt.-%, more preferably from 5.0 wt.% to 10.0 wt.-%, based on the total weight of the at least one organopolysiloxane polymer (A) having unit formula (I), the at least one base catalyst (B), the at least one alcohol (C) and the water (D).

Substantial amount of added water is necessary to increase yield of the depolymerization process according to the invention while increasing the amount of Si-OH generated in the process. For example, if the water (D) is used below 1.0 wt.%, based on the total weight of the at least one organopolysiloxane polymer (A) having unit formula (I), the at least one base catalyst (B), the at least one alcohol (C) and the water (D), the yield of the depolymerization process reduces and Si-OH content of the obtained organopolysiloxane polymer (E1) is also relatively low. Also, if the amount of water is too high, the yield of the depolymerization process reduces.

In the present invention, the at least one organopolysiloxane polymer (A), the at least one base catalyst (B), the at least one alcohol (C) and the water (D) are preferably reacted for 0.1 h to 48 h, preferably for 1 h to 10 h, more preferably for 2 h to 5 h.

The process of the present invention preferably yields a reaction mixture comprising at least one organopolysiloxane polymer (E1), which has a weight average molecular weight Mw of from 1,000 to 50,000 g/mol; at least one cyclic organosiloxane (E2), which has a weight average molecular weight Mw of <1,000 g/mol; and a solid phase (E3).

The process of the present invention further comprises a step of separating the at least one organopolysiloxane polymer (E1) and the at least one cyclic organosiloxane (E2) from the reaction mixture.

The organopolysiloxane polymer (E1) obtainable by the depolymerization process of the present invention has a weight average molecular weight Mw of from 1,000 to 50,000 g/mol, preferably from 2,500 to 30,000 g/mol, more preferably from 4,000 to 15,000 g/mol, most preferably from 4,000 to 7,000 g/mol. The organopolysiloxane polymer (E1) is preferably separated from the reaction mixture, preferably by distillation, for example through classic distillation or thin film evaporation. The at least one organopolysiloxane polymer (E1) preferably comprises at least one hydroxy group, more preferably at least two hydroxy groups, and is preferably usable as a telechelic polymer.

The cyclic organosiloxane (E2) obtainable by the process for depolymerization of a silicone formulation according to the present invention has a weight average molecular weight Mw of <1,000 g/mol, preferably <750 g/mol, more preferably <500 g/mol. The at least one cyclic organosiloxane (E2) is preferably separated from the reaction mixture, preferably by distillation, for example through classic distillation or thin film evaporation. The cyclic organosiloxane (E2) is acquired as thelow boiling point fraction of the process.

Additionally, a solid phase (E3) can be separated from the reaction mixture, preferably by extraction, which solid phase (E3) contains crosslinking units of the formulated silicone; in other words, the proposed procedure allows for effectively removing of crosslinking units from the reaction mixture of the process for depolymerization of a silicone formulation according to the invention.

In preferred embodiments, after the reaction of at least one organopolysiloxane polymer (A) with at least one base catalyst (B), at least one alcohol (C) and water (D), the reaction mixture is filtered to remove the solid phase (E3). The liquid extract is then washed with water, preferably with an aqueous solution of a salt that increases the polarity of the phase and thus aids in phase separation. Washing is repeated until the aqueous phase is measured to have a pH > 5 and < 9, preferably >6 and <8. After the last washing the silicone phase is dried with a desiccant, preferably a carbonate, more preferably sodium bicarbonate. The desiccant is then removed through filtration. Subsequently the organopolysiloxane phase is subjected to further separation into low and high boiling fractions through e.g., distillation, preferably through thin film evaporation. Resulting low boiling phase is hereafter referred to as cyclic organosiloxane (E2), while high boiling phase is referred to as organopolysiloxane polymer (E1).

In preferred variants, the process of the present invention yields 45 wt.% to 95 wt.%, preferably 45 wt.% to 85 wt.%, more preferably 65 wt.% to 80 wt.% of at least one organopolysiloxane polymer (E1) having a weight average molecular weight Mw of from 1,000 to 50,000 g/mol, preferably from 2,500 to 30,000 g/mol, more preferably from 4,000 to 15,000 g/mol, most preferably from 4,000 to 7,000 g/mol; 5 wt.% to 45 wt.%, preferably 15 wt.% to 45 wt.%, more preferably 20 wt.% to 35 wt.% of at least one cyclic organosiloxane (E2) having a weight average molecular weight Mw of <1,000 g/mol, preferably <750 g/mol, more preferably <500 g/mol; and 0 wt.% to 50 wt.%, preferably 0 wt.% to 15 wt.%, more preferably 0 wt.% to 5 wt.% of solid phase (E3) containing crosslinking units of the formulated silicone, based on the total weight of the at least one organopolysiloxane polymer (A) having unit formula (I) depolymerized in the process.

The at least one organopolysiloxane polymer (E1) having a weight average molecular weight Mw of from 1,000 to 50,000 g/mol, preferably from 2,500 to 30,000 g/mol, more preferably from 4,000 to 15,000 g/mol, most preferably from 4,000 to 7,000 g/mol is particularly suited for the preparation of a curable composition comprising the at least one organopolysiloxane polymer (E1) or derivatives thereof and optionally other components, such as surface treated silica (F), surface treated calcium carbonate (G), at least one additional aminosilane (H), and optionally the other ingredients described herein. Said curable composition is preferably obtained by simply mixing said components, preferably in suitable dispersing units, e.g., a high-speed mixer.

In this case, preferably, care is taken that the curable composition of the present invention does not come into contact with moisture as far as possible, which could lead to an undesirable premature curing. Suitable measures are sufficiently known and comprise, for example, working in an inert atmosphere, possibly under a protective gas, and drying/heating of individual components before they are added.

Many modifications and other embodiments of the inventions set forth herein will come to mind to one skilled in the art to which these inventions pertain having the benefit of the teachings presented in the foregoing descriptions. Therefore, it is to be understood that the inventions are not to be limited to the specific embodiments disclosed and that modifications and other embodiments are intended to be included within the scope of the appended claims. Moreover, although the foregoing descriptions describe some example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

The following examples serve to illustrate the invention, but the invention is not limited thereto.

### Examples

PE-Cartridges (22) of plastic comprising RTV-1 silicone as a silicone formulation, wherein the cartridges (22) have a tube body which is open at one end, is closed at the other end by a lid (30) with a threaded nozzle (54) for a nozzle (24) and a piercable inner opening, and in which a piston (36) is arranged in a movable manner were recycled by a process, in which
a) the cartridges (22) are first aligned in such a way that they are pressed and fixed with their threaded nozzle (54) to a ring stop (68) which freely encompasses the threaded nozzle (54);
b) the tip of the cartridge is cut off immediately behind the lid (30);
c) the piston (36) is pushed out of the tube sleeve (32) with an ejection tool in the direction of the lid (30);
d) the silicone formulation is separated from the inner wall of the tube sleeve (32) and from the lid (30) cut off and separately collected;
e) the silicone formulation is depolymerized by reacting the silicone formulation with
   (B) at least one metal hydroxide as base catalyst,
   (C) at least one alcohol and
   (D) water
   at a temperature of 80°C or more, as detailed in Examples 1 and 2.

### Example 1

1000 g RTV-1¹ silicone
1000 g isopropanol
100 g potassium hydroxide
50 g distilled water

In a 4000ml three-necked flask with intensive cooler, the components from the sample recipe are weighed. The mixture is heated to 85 °C while stirring and depolymerized for 3 hours with reflux. After cooling, the depolymerized mixture is filtered at approx. 30 °C with a Pall pressure filter, filter BECO KD-5 at 2 bar. The isopropanol-PDMS mixture is washed with aqueous 1 % KCI solution to pH neutrality and the silicone phase is collected. After aqueous processing, the silicone phase is dried with approx. 10 g Na₂CO₃ and filtered off via a frit. The depolymerized material phase is separated into a high boiling high-molecular weight PDMS phase (Mw 4000-7000) (E1) and a low boiling low-molecular weight phase (Mw 250-350) (cyclic organosiloxane) (E2) via thin-film evaporation at 120 °C/ 10 mbar. ¹: room temperature vulcanizing; 1 component

### Example 2

160 g RTV-1 silicone (organopolysiloxane polymer having unit formula (I) with R¹ is methyl, R² is methyl, x is 0, y is 0, z is 0, a is 1/11, b is 10/11, c is 0 and d is 0)
160 g isopropanol
16 g potassium hydroxide
16 g distilled water

In a 4000ml three-necked flask with intensive cooler, the components from the sample recipe are weighed. The mixture is heated to 80 °C while stirring and depolymerized for 3 hours. After cooling, the depolymerized mixture is filtered at approx. 30 °C with a Pall pressure filter, filter BECO KD-5 at 2 bar. The isopropanol-PDMS mixture is washed with aqueous 1 % KCI solution to pH neutrality and the silicone phase is collected. After aqueous processing, the silicone phase is dried with approx. approx. 10 g Na₂CO₃ and filtered off via a frit. The depolymerized material phase is separated into a high boiling high-molecular weight PDMS phase (E1) and a low boiling low-molecular weight phase (cyclic organosiloxane) (E2) via thin-film evaporation at 120 °C/ 10 mbar.

**Table 1**

| Example | Recovered material [g] | Peak 1 (E1) | | | Peak 2 (E2) | | |
|---|---|---|---|---|---|---|---|
| | | % | Mw | PDI | % | Mw | PDI |
| 2 | 139 | 67.7 | 6020 | 1.69 | 32.3 | 294 | 1.05 |

## Claims

1. Process for recycling cartridges (22) of plastic comprising at least one silicone formulation, wherein the cartridges (22) have a tube body which is open at one end, is closed at the other end by a lid (30) with a threaded nozzle (54) for a nozzle (24) and a piercable inner opening, and in which a piston (36) is arranged in a movable manner, by which process
a) the cartridges (22) are preferably first aligned in such a way that they are pressed and fixed with their threaded nozzle (54) to a ring stop (68) which freely encompasses the threaded nozzle (54);
b) the tip of the cartridge, preferably immediately behind the lid (30), is cut off;
c) the piston (36) is pushed out of the tube sleeve (32) with an ejection tool in the direction of the lid (30);
d) optionally, the silicone formulation is separated from the inner wall of the tube sleeve (32) and/or from the lid (30) cut off and separately collected;
e) the at least one silicone formulation is depolymerized by reacting the silicone formulation with
(B) at least one base catalyst, preferably at least one metal hydroxide,
(C) at least one alcohol and
(D) water
at a temperature of >50°C, preferably >60°C, more preferably >70°C, even more preferably >75°C, most preferably >80°C.

2. Process according to claim 1, wherein the tube sleeves (32) and/or the lids (30) cleaned from silicone formulation are separately collected and recycled, preferably by granulating and thermoplastic processing of the material.

3. Process according to claim 1 or 2, wherein silicone formulation is separated from the tube sleeves (32) and/or the lids (30) by mechanical means, in particular by use of a brush.

4. Process according to at least one of the preceding claims, wherein the lids (30) and/or nozzle (24) is directly added to step d).

5. Process according to at least one of the preceding claims, comprising the step of granulating the silicone formulation.

6. Process according to at least one of the preceding claims, wherein the at least one silicone formulation comprises at least one organopolysiloxane polymer (A) having unit formula (I)
(R¹₃₋ₓR²ₓSiO_{1/2})ₐ(R¹_{2-y}R²_{y}SiO_{2/2})_{b}(R_{11-z}R²_{z}SiO_{3/2})_{c}(SiO_{4/2})_{d} (I)
wherein each R¹ is independently selected from the group consisting of substituted or unsubstituted hydrocarbyl groups, which may be optionally interrupted by at least one heteroatom, a hydroxy group, hydrogen, and hydrolysable groups; each R² is independently selected from aliphatically unsaturated groups; x has a value from 0 to 3, y has a value from 0 to 2, and z has a value from 0 to 1; subscripts a, b, c and d represent mole fractions of each unit in the unit formula, and subscripts a, b, c, and d have values such that preferably 0<a≤0.3, preferably 0.4≤b<1, preferably 0≤c≤0.2 and preferably 0≤d≤0.3, with the proviso that a+b+c+d=1.

7. Process according to at least one of the preceding claims, wherein the amount of water (D) is at least 1.0 wt.%, preferably at least 2.0 wt.%, more preferably at least 5.0 wt.%; and, at most 30.0 wt.%, preferably at most 20.0 wt.%, more preferably at most 10.0 wt.%, based on the total weight of the at least one organopolysiloxane polymer (A) having unit formula (I), the at least one base catalyst (B), the at least one alcohol (C) and the water (D).

8. Process according to at least one of the preceding claims, wherein the at least one base catalyst (B) is selected from the group consisting of alkali metal hydroxide, preferably sodium hydroxide, potassium hydroxide; in particular potassium hydroxide; alkaline earth metal hydroxide, preferably calcium hydroxide, magnesium hydroxide; aluminum hydroxide; boron hydroxide; ammonium hydroxide; tetraalkylammonium hydroxide, preferably quaternary ammonium hydroxide of type [NY₄]⁺OH⁻, wherein Y is alkyl, more preferably methyl, ethyl, propyl, iso-propyl, n-butyl, sec. butyl, tert. butyl, especially n-butyl, in particular, tetramethylammonium hydroxide, tetraethylammonium hydroxide; benzyl trimethyl ammonium hydroxide, preferably from quaternary ammonium hydroxide of the type [H₅C₆-CH₂-NY₃]⁺OH⁻, wherein Y is alkyl, more preferably methyl, ethyl, propyl, iso-propyl, n-butyl, sec. butyl, tert. butyl, especially n-butyl.

9. Process according to at least one of the preceding claims, wherein the at least one alcohol (C) is selected from the group consisting of methanol, ethanol, n-propanol, iso-propanol, n-butanol, isobutanol, sec.-butanol, pentanol, hexanol, heptanol, octanol, nonanol, decanol, undecanol, preferably from the group consisting of methanol, ethanol, n-propanol, iso-propanol, n-butanol, isobutanol, sec.-butanol, more preferably n-propanol, iso-propanol, in particular iso-propanol.

10. Process according to at least one of the preceding claims, wherein the at least one base catalyst (B) is potassium hydroxide and the at least alcohol (C) is iso-propanol.

11. Process according to at least one of the preceding claims, wherein the weight ratio of the at least one alcohol (C) to the at least one base catalyst (B) is selected within the range of from >0.1-10 to 0.1, preferably of from 0.25-5.0 to 0.1, more preferably of from 0.5-2.0 to 0.1; and/or the weight ratio of the at least one organopolysiloxane polymer (A) having unit formula (I) to the at least one alcohol (C) is selected within the range of from 0.1-10 to 1, preferably of from 0.25-5 to 1, more preferably of from 0.5-2 to 1; and/or the amount of water (D) is selected from 1.0 wt.% to 30.0 wt.-%, preferably from 2.5 wt.% to 20.0 wt.-%, more preferably from 5.0 wt.% to 10.0 wt.-%, based on the total weight of at least one organopolysiloxane polymer (A) having unit formula (I), the at least one base catalyst (B), the at least one alcohol (C) and the water (D).

12. Process according to at least one of the preceding claims, wherein the silicone formulation, the at least one base catalyst (B), the at least one alcohol (C) and the water (D) are reacted for 0.1 h to 48 h, preferably for 1 h to 10 h, more preferably for 2 h to 5 h.
